# EUROPEAN PATENT APPLICATION

(11) **EP 4 661 359 A1**
(43) Date of publication of application: **10.12.2025**
(21) Application number: 25174648.3
(22) Date of filing: 06.05.2025
(51) Int. Cl.: H04L 43/026, H04L 43/10, H04L 43/12, H04L 43/08

(54) **PATH TRACING PROXY BEHAVIOUR FOR INTEGRATION WITH EXTERNAL PROBING APPLIANCE**

(30) Priority: 04.06.2024 US 202418733783
(71) Applicant: Cisco Technology, Inc., San Jose, CA 95134-1706 (US)
(72) Inventor: GANDHI, Rakesh, Stittsville K2S 2E3 (CA); FILSFILS, Clarence, 1150 Brussels (BE); ABDELSALAM, Ahmed Mohamed Ahmed, 67100 L'Aquila (IT); CAMARILLO GARVIA, Pablo, 28007 Madrid (ES); AYED, Sonia Ben, 92170 Vanves (FR)
(74) Representative: Mathys & Squire

(57) **Abstract**

Systems, methods, and computer-readable media are provided for path tracing proxy behavior using an external probing appliance. An example method can include generating, at an external probing appliance of a network, a probe packet, the probe packet including a source address, a destination address, and a packet tracing indication in a next header field of the probe packet, the packet tracing indication triggering a proxy source behavior at a source node having the source address and a proxy sink behavior at a sink node having the destination address; sending the probe packet to the source node to trigger a packet tracing mechanism; and receive an updated probe packet from the sink node, the updated probe packet including probe data associated with one or more data flows in the network as the one or more data flows traverse the network from the source node to the sink node.

## Description

### BACKGROUND

Digital communications and interactions have become the norm in present day society. Packets carrying data traverse many different devices or nodes in the form of packets to enable these digital communications. Some of these devices and nodes are used to route packets from a source to a destination. Path tracing (PT) traces a path that a packet takes across the devices and nodes to reach the destination from the source. PT can provide a variety of information to monitor traffic across networks.

### BRIEF DESCRIPTION OF THE SEVERAL VIEWS OF THE DRAWINGS

In order to describe the manner in which the above-recited and other advantages and features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:
FIG. 1 illustrates an example network environment having an external probing appliance in accordance with some aspects of the present technology.
FIG. 2 illustrates an example path tracing probe packet in accordance with some aspects of the present technology.
FIG. 3 illustrates an example path tracing probe packet in accordance with some aspects of the present technology.
FIG. 4 illustrates an example path tracing probe packet in accordance with some aspects of the present technology.
FIG. 5 illustrates a method for path tracing proxy behavior using an external probing appliance in accordance with some aspects of the present technology.
FIG. 6 illustrates an example network device, in accordance with some aspects of the disclosed technology.
FIG. 7 shows an example of a system for implementing certain aspects of the present technology.

### DESCRIPTION OF EXAMPLE EMBODIMENTS

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure.

### OVERVIEW

Aspects of the invention are set out in the independent claims and preferred features are set out in the dependent claims. Features of one aspect may be applied to each aspect alone or in combination with other features.

In one aspect, a packet probing method includes generating, at an external probing appliance of a network, a probe packet, the probe packet including a source address, a destination address, and a packet tracing indication in a next header field of the probe packet, the packet tracing indication triggering a proxy source behavior at a source node having the source address and a proxy sink behavior at a sink node having the destination address, sending the probe packet to the source node to trigger a packet tracing mechanism, and receive an updated probe packet from the sink node, the updated probe packet including probe data associated with one or more data flows in the network as the one or more data flows traverse the network from the source node to the sink node.

In another aspect, the probe packet is generated with one or more values for equal cost multi-path monitoring.

In another aspect, the source address and the destination address are in a measurement virtual routing and forwarding (VRF).

In another aspect, the source node encapsulates the probe packet to reach the sink node by adding IPv6 destination and IPv6 Hop-by-Hop (HBH) headers.

In another aspect, an IPv6 Hop-by-Hop header specifies recording of midpoint compressed data (MCD) at each of one or more hops between the source node and the sink node.

In another aspect, the sink node, upon receiving the probe packet, decapsulates the probe packet to retrieve the probe data.

In another aspect, the probe data is included in a payload of the updated probe packet to be sent to the external probing appliance.

In one aspect, a non-transitory computer-readable medium storing instructions thereon, where the instructions, when executed by one or more processors, cause the one or more processors to: generate, at an external probing appliance of a network, a probe packet, the probe packet including a source address, a destination address, and a packet tracing indication in a next header field of the probe packet, the packet tracing indication triggering a proxy source behavior at a source node having the source address and a proxy sink behavior at a sink node having the destination address, send the probe packet to the source node to trigger a packet tracing mechanism, and receive an updated probe packet from the sink node, the updated probe packet include probe data associated with one or more data flows in the network as the one or more data flows traverse the network from the source node to the sink node.

In one aspect, a system includes a processor, and a non-transitory memory storing computer-executable instructions thereon, where the computer-executable instructions, when executed by the processor, cause the processor to: generate, at an external probing appliance of a network, a probe packet, the probe packet including a source address, a destination address, and a packet tracing indication in a next header field of the probe packet, the packet tracing indication triggering a proxy source behavior at a source node having the source address and a proxy sink behavior at a sink node having the destination address. The system also includes send the probe packet to the source node to trigger a packet tracing mechanism. The system also includes receive an updated probe packet from the sink node, the updated probe packet include probe data associated with one or more data flows in the network as the one or more data flows traverse the network from the source node to the sink node.

Other technical features may be readily apparent to one skilled in the art from the following figures, descriptions, and claims.

### DESCRIPTION

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

Digital communications and interactions have become the norm in present day society. Packets carrying data traverse many different devices or nodes in the form of packets to enable these digital communications. Some of these devices and nodes are used to route packets from a source to a destination. Path tracing (PT) traces a path that a packet takes across the devices and nodes to reach the destination from the source. PT can provide a variety of information to monitor traffic across networks.

For example, PT provides a record of a packet path as a sequence of interface IDs. In addition, PT can provide a record of end-to-end delay, per-hop delay, and load on each egress interface along the packet delivery path. A classical PT source node generates PT probes towards a sink node to measure different equal-cost multi-path routing (ECMP) paths between the source and the sink nodes. Once those packets traverse the network, they are encapsulated and forwarded to a PT collector (e.g., which can be part of a PT analytics controller running on a compute node) where the information collected along the packet delivery path is processed.

Classical PT can be implemented at line-rate in a base pipeline across several ASICs including Cisco Silicon-One ASIC, Cisco Lightspeed LCs, Broadcom Jericho2 ASIC, and Marvell Falcon ASIC. However, some platforms may encounter a scale limit. For example, some ARM co-processors are only capable of holding about 120 sessions per network processing unit (NPU) and may be unable to scale to handle requirements to generate probes at a more rapid rate. For example, it may be desirable to generate probes at a higher rate to monitor edge-to-edge/per-hop latency and loss on ECMP paths between two provider edge nodes in the network.

The present technology proposes generating probe packets and displaying analytics on a graphical user interface (GUI) by an external probing appliance associated with a network including the nodes. However, simply using an external probing appliance can pose various challenges.

For example, generating PT probes on an external probing appliance may encounter challenges in following traffic flow. For example, some entities have specific requirements to monitor traffic flow and specific ECMP paths used by the traffic flow. Some entities may find monitoring data packet forwarding paths from the ingress node to the egress node to be important. These entities may desire to use their own external probing appliance to generate and consume probe packets. However, the proper encapsulations need to be mimicked. For example, a seed is used on sync to forwarding behavior to a collector. Using another seed may not follow the traffic flow that the entities may desire to monitor because there would be a different or changed encapsulation.

The present technology addresses the above challenges by using an external probing appliance to generate and send probes to a source node to trigger a proxy source behavior at the source node. By sending the probe to the source node, the external probing appliance can cause the source node to trigger a packet tracing mechanism using encapsulations matching typical traffic flows through the source node.

The packet can include a next header field. A source address, a destination address, and a packet tracing indication can be stored in the next header field. The packets are encapsulated on the source provider edge (PE) and decapsulated on the sink PE, with the same encapsulation as regular traffic data with the addition of PT proxy-source and sink behaviors. The packet can include a hint or trigger in the Next-Header field (e.g., NH=PT-TRANSPORT) of the IPv6 packet to identify the path tracing packets to trigger proxy-source and proxy-sink behaviors. The proxy-source identifies the path tracing packets and forwards them in a measurement VRF after encapsulating with path tracing headers. The proxy-sink can decapsulate the outer (e.g., service) header and identify the path tracing packets (e.g., using NH=PT-TRANSPORT) and move the collected path tracing source and midpoint data from headers to a payload and append local path tracing sink data to the payload. The proxy-sink can then forward the packet to the appliance. In some embodiments, these operations can be performed on a proxy-sink node without requiring any special SRv6 SID (e.g., END. uTEF, Timestamp, Encapsulation and Forward micro-sid) in a destination address, which can otherwise result in a packet taking a different ECMP path. Additionally, the present technology can trigger the behaviors on associativity-based router nodes to keep read/write depth smaller in the path tracing headers (e.g., using smaller IPv6 HBH option header size that hardware/ASICs are capable of reading/writing). As Next Header (NH) value for PT-TRANSPORT is used in the inner IP header of the PT probe packets between PT Proxy-source and proxy-sink, and outer IPv6/SRH encapsulation does not require to use this Next Header value, the ECMP path that uses the NH field in hashing function is not adversely affected by this scheme.

In some embodiments, the probe packet is generated with a Generic Routing Encapsulation (GRE) header as an indication for packet tracing mechanism on the source node that will decapsulate the GRE header and trigger packet tracing instructions.

In some embodiments, the probe packet is encapsulated with SR network programming Segment Identifier (SID) that is used as a trigger for packet tracing instructions on source node. This can be based on Segment Routing with MPLS label or Segment Routing with IPv6 data plane Segment Identifier (SRv6 SID).

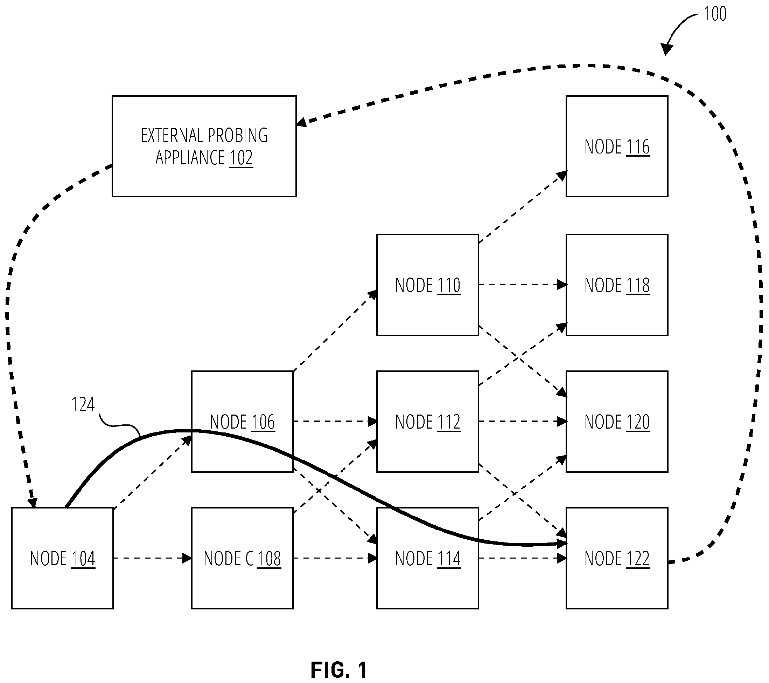

Turning now to the drawings, FIG. 1 illustrates an example network environment 100 including an external probing appliance 102 and a plurality of nodes such as node 104, node 106, node 108, node 110, node 112, node 114, node 116, node 118, node 120, and node 122 (collectively, nodes 104-122).

Although FIG. 1 is illustrated with unidirectional arrows, one of ordinary skill in the art would understand that communications can flow in any direction between and among nodes 104-122. Similarly, the layout provided in FIG. 1 is for explanatory and discussion purposes only and one of ordinary skill in the art would understand that the nodes can be configured to communicate with some and/or all other nodes in network environment 100.

External probing appliance 102 is configured to monitor hop-by-hop latency, end-to-end packet loss, and record packet paths and monitor end-to-end liveliness by sending and receiving packets from nodes 104-122. For example, external probing appliance 102 can generate L3 and/or L2 path tracing probe packets with source and destination addresses in a measurement VRF using new path tracing source and sink proxy behaviors. External probing appliance 102 can generate path tracing probe packets and send the path tracing probe packets to nodes 104-122, which can act as proxies for external probing appliance 102. For example, FIG. 1 illustrates external probing appliance 102 generating a path tracing probe packet configured to trigger a proxy behavior on an ingress provider edge or receiving node (e.g., node 104). FIG. 1 also illustrates external probing appliance 102 sending the path tracing probe packet to node 104, which can be configured to act as a proxy-source provider edge as described further in detail below. In some embodiments, external probing appliance 102 can generate the probe packets with different values in a flow-label for ECMP path monitoring.

External probing appliance 102 is also configured to receive path tracing packets after the path tracing probe packets have traversed through at least one of the nodes 104-122 of network environment 100. For example, FIG. 1 illustrates external probing appliance 102 receiving a path tracing packet from node 122, which can act as a proxy-sink provider edge as described further in detail below.

Nodes 104-122 are configured to send, receive, and otherwise communicate data to and from other nodes 104-122 and devices. For example, node 104 can send packets to node 106 and node 108. For example, nodes 104-122 can be provider edges (e.g., provider edge routers) or other routing devices that are capable of various routing protocols to route data thereacross. Additionally, measurement virtual routing and forwarding (VRF) can be defined on nodes 104-122. For example, ingress nodes (e.g., node 104) and egress nodes (e.g., node 122) can have measurement VRFs defined thereon with loopback addresses. In some embodiments, separate measurement VRFs are defined for different IGP Flex-Algorithm loopback. Measurement VRFs can generate the same IPv6/SRH with SRv6 SIDs END.DT4/END.DT6/END.DT46/END.DT2u (or their SRv6 uSIDs END.uDT4/END.uDT6/END.uDT46/END.uDT2u), etc. encapsulation as regular customer or traffic data packets, so that packets can travel similar to typical traffic data being measured. In some embodiments, a seed is used on sync on a source in a hardware offload engine (NPU host) that matches customer data packets encapsulation (e.g., in VRF) with a specific flow-label value for ECMP measurements. In some embodiments, path tracing packets need not carry any special SRv6 uSID (e.g., microsegments), which may otherwise result in path tracing packets following different ECMP paths than the customer traffic data.

In some embodiments, specific VRFs can be used to designate or otherwise identify a packet for path tracing. For example, when a packet is received with the specific VRF, a node 104-122 can determine the packet to be for path tracing and perform operations or other functions to facilitate the path tracing.

Nodes 104-122 can be configured with various functions including proxy-source function(s), midpoint function(s), and/or proxy-sink function(s). A proxy-source function can include encapsulating path tracing probe packets to reach other provider edges or nodes 104-122. For example, FIG. 1 illustrates a path 124 that the path tracing packets traverses through. As further illustrated in FIG. 1, path 124 includes node 104 as an ingress provider edge that receives path tracing probe packets from external probing appliance 102. Node 104 can act as a proxy-source node to identify a path tracing packet and forward the packets in a measurement VRF after encapsulating the path tracing probe packets received from external probing appliance 102 using a similar or the same encapsulation as node 104 would use for typical data traffic routing therethrough. For example, the proxy-source node can encapsulate the path tracing packets with a path tracing source header (e.g., IPv6 Destination Option) and/or midpoint headers (e.g., pre-allocated IPv6 Hop-By-Hop option). The path tracing packets are forwarded in VRF matching the same data packet encapsulation as other traffic.

Proxy-source functions can also include adding path tracing headers. For example, an ingress provider edge, such as node 104 as illustrated in FIG. 1, can add IPv6 Destination Options and IPv6 Hop-by-Hop (HBH) options headers. Proxy-source functions can also include updating path tracing data in headers. For example, node 104 can update an HBH header with data associated with node 104. In some embodiments, the proxy-source behavior is defined based on a Next-Header field and/or based on the path tracing IPv6 Destination Option type present. For example, when the Next-Header field is defined as PT-TRANSPORT, the proxy-source can determine that the packet is a path tracing probe packet. The proxy-source provider edge can then perform proxy-source functions based on the determination.

Midpoint functions can include receiving path tracing packets and updating headers of the packets with various types of data. For example, midpoint nodes can update HBH headers with timestamps, interface identifiers, interface loads, etc. For example, FIG. 1 illustrates path 124 that the path tracing packets traverses through. As further illustrated in FIG. 1, path 124 includes node 106 and node 114 as midpoint nodes that are traversed by the probe packets. Node 106 and node 114 can update in IPv6 HBH option of the path tracing packet with an 8-bit timestamp, 12-bit interface identifier, 4-bit interface load, etc. The midpoint nodes can then send the packets with the updated headers forward onto the next hop or node. For example, node 106 can update the headers of the path tracing probe packet and send the updated packet to node 114. In some embodiments, the midpoint behavior is defined based on the Next-Header field. For example, when the Next-Header field is defined as PT-TRANSPORT, the midpoint node can determine that the packet is a path tracing probe packet. The midpoint node can then perform midpoint functions based on the determination. For example, an IPv6 HBH header can specify recording of midpoint compressed data (MCD) at each of one or more hops between the source node and the sink node. The midpoint nodes can, after determining that a received packet is a path tracing packet based on the Next-Header field defined as PT-TRANSPORT, record midpoint compressed data into the HBH header.

Proxy-sink functions can include receiving the path tracing packets with updated headers from previous nodes and include decapsulating the packet in the same or similar manner as the node would decapsulate typical traffic data packets. In some embodiments, the proxy-sink behavior is defined based on the Next-Header field and/or based on the path tracing IPv6 Destination Option type present. For example, when the Next-Header field is defined as PT-TRANSPORT, the proxy-sink can determine that the packet is a path tracing probe packet. The proxy-sink provider edge can then perform proxy-sink functions based on the determination. In some embodiments, defining the Next-Header field with PT-TRANSPORT and/or the path tracing IPv6 Destination Option type present can trigger the proxy-sink behaviors on the proxy-sink or egress provider edge. For example, FIG. 1 illustrates path 124 having node 122 as an egress provider edge, which can perform proxy-sink functions. Node 122 can receive the updated path tracing packets from node 114. Node 122 can decapsulate the packet and perform, based on the Next-Header field having PT-TRANSPORT triggering the proxy-sink behaviors, the proxy-sink functions. While this disclosure discusses the usage of PT-TRANSPORT, one of ordinary skill in the art would understand that other similar identifiers can be used in place of PT-TRANSPORT and that the consistent usage thereof is for discussion and explanatory purposes only.

Proxy-sink functions can also include aggregating and appending the data of the path tracing probe packets to an egress packet to be sent back to external probing appliance 102. For example, the proxy-sink node can append the path tracing sink data (e.g., full 64-bit timestamp, 4-bit interface load, 12-bit interface identifier in IPv6 Destination Option format in the payload) and move the collected path tracing data (e.g., from the midpoint nodes and proxy-source node) received from the network environment 100 into a payload of the egress packet. The proxy-sink node can then forward the path tracing packets to the external probing appliance 102.

Proxy-sink functions can also include capturing analytics from hardware and forward the probe to a collector. A proxy-sink node can append the analytics (e.g., histogram latency bins of associated traffic flow between the ingress node to the egress node or percentile latency metrics or other statistics) into the payload of the egress packet and forward the path tracing packets to the external probing appliance 102.

Additionally, proxy-sink functions can include collecting path tracing headers from the packets and punting the packet locally to perform analytics in hardware of the proxy-sink node. For example, a proxy-sink node can collect the path tracing headers from the packets and locally analyze the packets. In some instances, this may reduce load on the external probing appliance 102, such that the external probing appliance 102 does not need to process the received packets at a high rate and can utilize the processor cycles to generate additional path tracing traffic at a higher rate, which are consumed instead at the hardware of the sink nodes.

In some embodiments, the proxy-sink functions can include triggering analytics in the hardware of the sink node and forward a copy to a collector. When the path tracing packet comes to the sink node, the proxy-sink functions in the hardware can add another IPv6 option with a timestamp, an interface identifier, and interface load. The sink node can then forward the augmented packet to the collector for full analysis. Additionally, the proxy-sink functions can include copying the packet and punting the packet locally to perform hardware sink analytics with various metrics including number of packets, number of bytes, trajectory, end-to-end latency, etc.

Packet tracing measurement data can be correlated with the routing data using a network map for grading and analyses. For example, the packet tracing measurement data can be used for root-cause analysis, post-mortem analysis, clustering (to associate impacted failures due to sharing part of the path), etc. In some embodiments, Routing Analytics (RA), using the network topology, computes a set of all possible ECMP paths including their cumulative latency based on link latency metrics in the topology between two nodes. PT measurement enables recording all possible ECMP paths between two nodes along with hop-by-hop latency and interface load. The expected ECMP paths and expected latency values provided by RA are correlated with the measured ECMP paths and measured latency values from PT probes to detect anomalies in the network. Network anomalies are high-lighted to the operator for further troubleshooting, root-cause analysis and correcting the network issues. The measured load on interfaces is compared with the expected load based on the traffic demand matrix to detect black holing of traffic, for example.

One of ordinary skill in the art would understand that nodes 104-122 can all be configured to perform the some or all of the various proxy-source functions, the midpoint functions, and/or the proxy-sink functions. In some embodiments, proxy-sources and proxy-sinks are implemented at Area Border Routers and path tracing can be performed on a per-domain basis to obtain an end-to-end snapshot. For example, path tracing proxy-sinks can append collected measurement data of the domain to a payload of a path tracing packet, which may contain path tracing data from a proxy-sink node of a previous domain that the packet traveled through. The proxy-sink node can then add a new PT encapsulation with new PT hop-by-hop header for collecting midpoint data in the new domain. In some instances, hardware can often have difficulties with reading and/or writing deeper into a packet. By implementing the above, the read/write depth in the packet header can be kept smaller and alleviate hardware challenges for reading and/or writing deep in the packet.

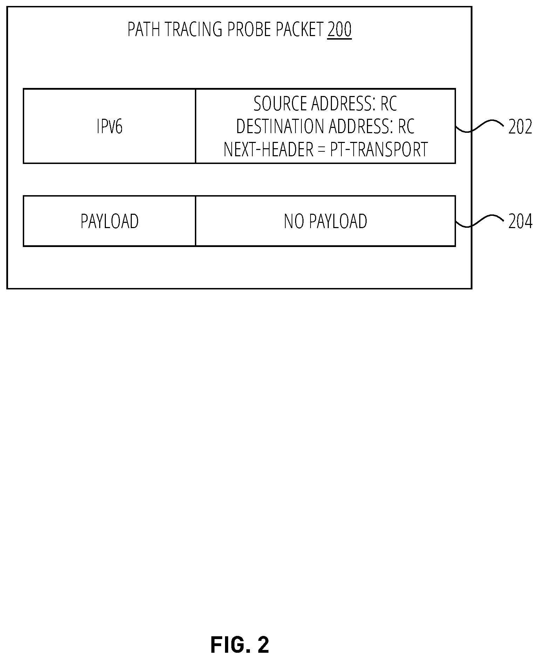

FIG. 2 illustrates an example path tracing probe packet 200 sent by an external probing appliance (e.g., the external probing appliance 102 discussed above with respect to FIG. 1) to an ingress provider edge (PE) or proxy-source node (e.g., node 104 discussed above with respect to FIG. 1). The probe packet 200 can include an IPv6 header 202 and a payload 204, which can remain vacant (e.g., no payload).

The IPv6 header 202 can include a source address, a destination address, and a next-header field. The source address can be an address (e.g., an IP address) of a source node (e.g., an ingress node). For example, the source address can be set as the IP address of the proxy-source node. The destination address can be an address (e.g., an IP address) of a destination node. For example, the source address can be set as the IP address of the proxy-sink node. In some embodiments, the source address and/or the destination address can be deferred to a regional collector (e.g., RC) or network controller. In some embodiments, the source address and the destination address can be in a measurement VRF, so that the probe packets carry packet encapsulations similar or the same as the encapsulations for typical traffic data being measured.

IPv6 header 202 can also include a Next-Header field. The Next-Header field can be used to designate the packet for path tracing. For example, the external probing appliance 102 can generate probe packet 200 with PT-TRANSPORT defined in the Next-Header field. By designating the Next-Header field with PT-TRANSPORT, the external probing appliance 102 can trigger path tracing behaviors on nodes that receive probe packet 200. For example, an ingress node receiving probe packet 200 (e.g., node 104) from the external probing appliance 102 can determine, based on PT-TRANSPORT in the Next-Header field, that proxy-source functions or behaviors need to be performed. The ingress node can then be a proxy-source node and perform the proxy-source functions. In some embodiments, network access control lists (ACL) can be used to enable path tracing on proxy-source nodes on flows specific for path tracing measurements (e.g., using the Next-Header field) generated by an external probing appliance 102.

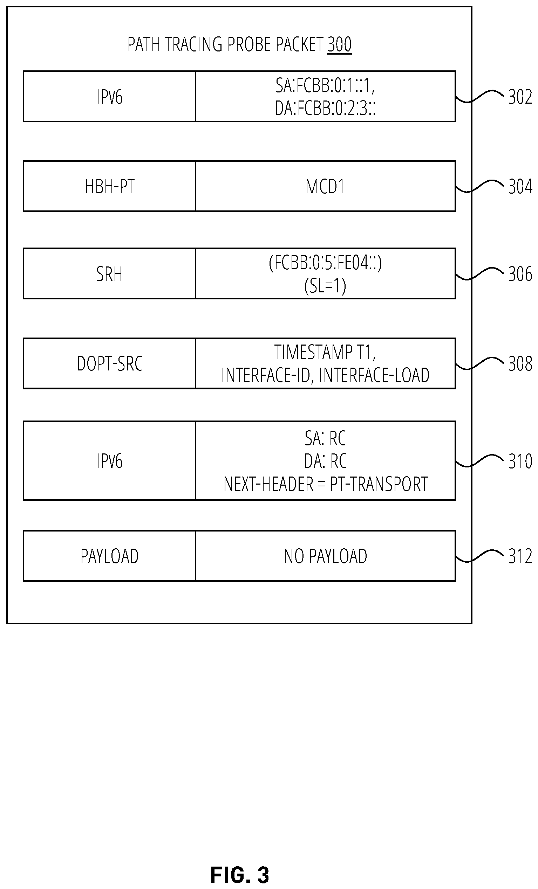

FIG. 3 illustrates an example path tracing probe packet 300 that is encapsulated by a proxy-source node (e.g., node 104 as discussed above with respect to FIG. 1). In some embodiments, the path tracing probe packet 300 is an updated packet of the path tracing probe packet 200 discussed above with respect to FIG. 2. The path tracing probe packet 300 can include an outer IPv6 header 302, a Hop-by-Hop (HBH) Path Tracing (PT) (HBH-PT) header such as HBH-PT header 304, a Segment Routing (SR) Header (SRH) such as SRH 306, a Destination Option Path Tracing (DOPT) source (SRC) (DOPT-SRC) header such as DOPT-SRC header 408, an inner IPv6 header 310, and a payload 312, which can remain vacant (e.g., no payload).

The outer IPv6 header 302 can include typical data for encapsulation of IPv6 packets. For example, the outer IPv6 header 302 can include a source address and a destination address.

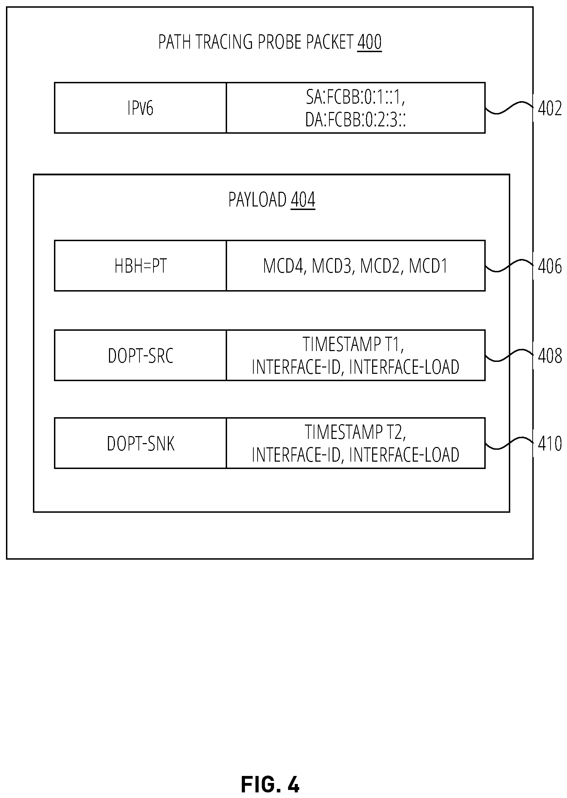

HBH-PT header 304 can be configured to store data that is updated by nodes that the packet traverses through. For example, node 104 can update HBH-PT header 304 to include midpoint compressed data (MCD). Similarly, subsequent nodes can update HBH-PT header 304 to include additional data. For example, after node 106 receives probe packet 300, node 106 can update HBH-PT header 304 with additional MCD (e.g., MCD2 as shown in FIG. 4 below). Similarly, node 114 can update HBH-PT header 304 to include a third MCD (e.g., MCD3 as shown in FIG. 4 below). In some embodiments, the HBH-PT header 304 can include timestamps, interface identifiers, and/or interface loads. For example, data of the HBH-PT header 304 can include an 8-bit timestamp, 12-bit interface identifier, and 4-bit interface load.

SRH 306 includes data identifying segments for routing and, in some instances, a service seed. For example, FIG. 3 illustrates SRH 306 having a service seed "FE04" that is installed on typical service data packets and the segment list for routing.

DOPT-SRC header 308 includes a timestamp, an interface identifier, and an interface load. For example, DOPT-SRC header 308 can include a full 64-bit timestamp, a 12-bit interface identifier, and a 4-bit interface load.

The path tracing probe packet 300 can also include the inner IPv6 header 310 and payload 312, which can be the IPv6 header 202 and payload 204 of probe packet 200. The inner IPv6 header 310 and payload 312 are encapsulated (e.g., by a proxy-source node, such as node 104) with outer IPv6 header 302, HBH-PT header 304, SRH 306, and DOPT-SRC header 308 and forwarded in a VRF matching other traffic data encapsulation to a next node or hop (e.g., node 106, as discussed above with respect to FIG. 1).

FIG. 4 illustrates an example path tracing probe packet 400 that is sent from a proxy-sink node (e.g., node 122 as discussed above with respect to FIG. 1) to an external probing appliance (e.g., external probing appliance 102 as discussed above with respect to FIG. 1).

As discussed above, a proxy-sink node can decapsulate incoming path tracing packets. For example, node 122 can receive a path tracing packet, determine the path tracing packet is a path tracing packet, and decapsulate the packet to extract or otherwise retrieve the data therein. Node 122 can then add the extracted data and DOPT-SNK information to the path tracing probe packet 400 and send the path tracing probe packet 400 to external probing appliance 102.

Like the path tracing probe packet 300, path tracing probe packet 400 can include an IPv6 header 402 similar or the same as the outer IPv6 header 302.

A payload 404 of the path tracing probe packet 400 can include an HBH-PT header 406, DOPT-SRC header 408, and a DOPT-SNK header 410. The HBH-PT header 406 can include data from HBH-PT header 304 that is updated after the path tracing probe packet 300 traversed each midpoint node. For example, FIG. 4 illustrates HBH-PT header 406 containing MCD4, MCD3, MCD2, MCD1, which were added by node 122, node 114, node 106, and node 104, respectively. The data of DOPT-SRC header 308 is retained in DOPT-SRC header 408, while the data of DOPT-SNK header 410 is added by the proxy-sink node after receiving the packet and determining that the packet is a path tracing probe packet.

In some embodiments, the path tracing sink IPv6 Destination Option can be added after the IPv6 header in the packet. In some embodiments, a hardware proxy-sink destination address can be any valid IP address on the node including an SRv6 Micro-SID (uSID) (e.g., END.uDT6, END.uDT4, END.uDT2u, etc.).

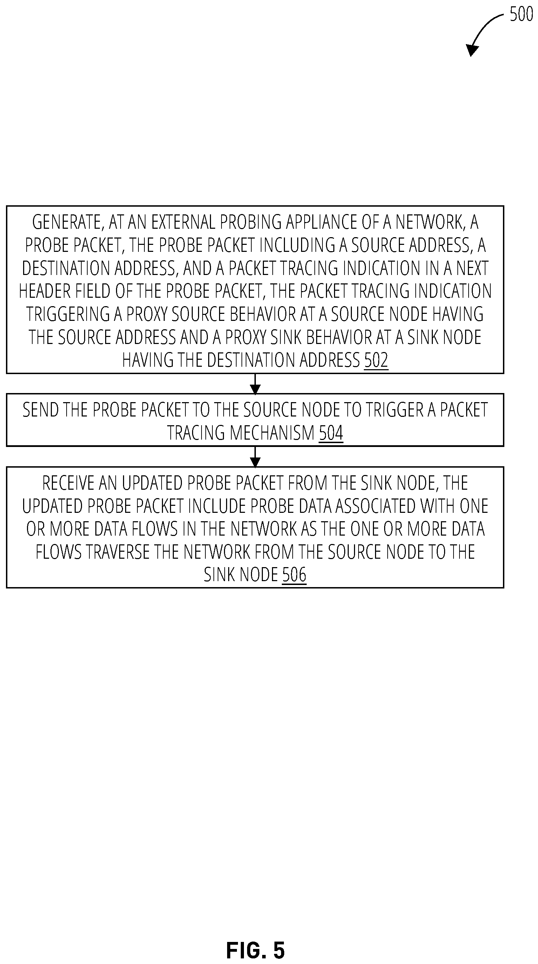

FIG. 5 illustrates an example method 500 for path tracing proxy behavior using an external probing appliance. Although the example method 500 depicts a particular sequence of operations, the sequence may be altered without departing from the scope of the present disclosure. For example, some of the operations depicted may be performed in parallel or in a different sequence that does not materially affect the function of the method 500. In other examples, different components of an example device or system that implements the method 500 may perform functions at substantially the same time or in a specific sequence.

At block 502, method 500 includes generating, at an external probing appliance of a network, a probe packet, the probe packet including a source address, a destination address, and a packet tracing indication in a next header field of the probe packet, the packet tracing indication triggering a proxy source behavior at a source node having the source address and a proxy sink behavior at a sink node having the destination address. In some embodiments, the probe packet is generated with one or more values for equal cost multi-path monitoring. In some embodiments, the source address and the destination address are in a measurement virtual routing and forwarding (VRF).

At block 504, method 500 includes sending the probe packet to the source node to trigger a packet tracing mechanism. In some embodiments, the source node encapsulates the probe packet to reach the sink node by adding IPv6 destination and IPv6 Hop-by-Hop (HBH) headers. In some embodiments, an IPv6 Hop-by-Hop header specifies recording of midpoint compressed data (MCD) at each of one or more hops between the source node and the sink node.

At block 506, method 500 includes receiving an updated probe packet from the sink node, the updated probe packet include probe data associated with one or more data flows in the network as the one or more data flows traverse the network from the source node to the sink node. In some embodiments, the sink node, upon receiving the probe packet, decapsulates the probe packet to retrieve the probe data. In some embodiments, the probe data is included in a payload of the updated probe packet to be sent to the external probing appliance.

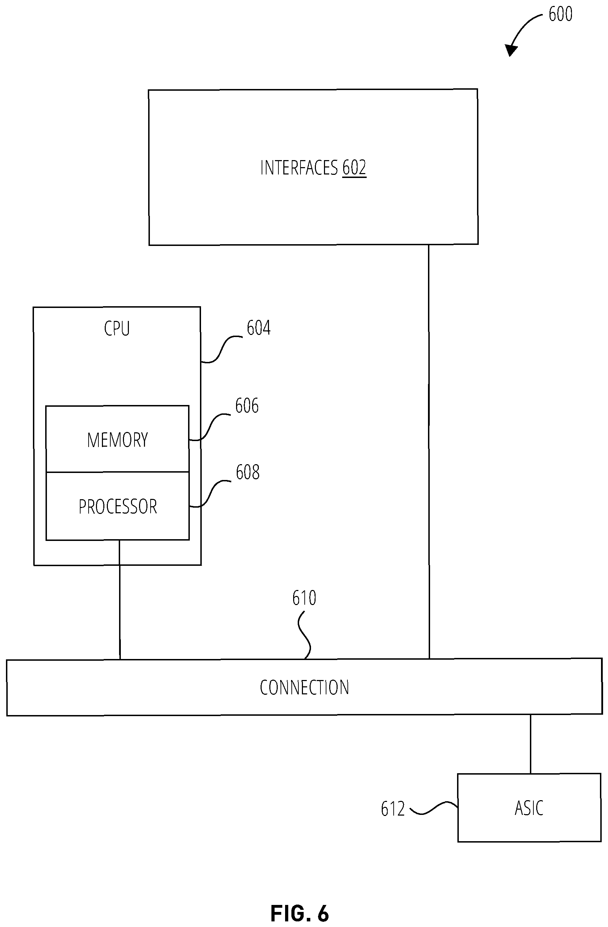

FIG. 6 illustrates an example network device 600 suitable for performing switching, routing, load balancing, and other networking operations. The example network device 600 can be implemented as switches, routers, nodes, metadata servers, load balancers, client devices, and so forth.

Network device 600 includes a central processing unit (CPU) such as CPU 604, interfaces 602, and a bus 610 (*e.g.*, a PCI bus). When acting under the control of appropriate software or firmware, the CPU 604 is responsible for executing packet management, error detection, and/or routing functions. The CPU 604 preferably accomplishes all these functions under the control of software including an operating system and any appropriate applications software. CPU 604 may include one or more processors such as processor 608, such as a processor from the INTEL X86 family of microprocessors. In some cases, processor 608 can be specially designed hardware for controlling the operations of network device 600. In some cases, a memory 606 (e.g., non-volatile RAM, ROM, etc.) also forms part of CPU 604. However, there are many different ways in which memory could be coupled to the system.

The interfaces 602 are typically provided as modular interface cards (sometimes referred to as "line cards"). Generally, they control the sending and receiving of data packets over the network and sometimes support other peripherals used with the network device 600. Among the interfaces that may be provided are Ethernet interfaces, frame relay interfaces, cable interfaces, DSL interfaces, token ring interfaces, and the like. In addition, various very high-speed interfaces may be provided such as fast token ring interfaces, wireless interfaces, Ethernet interfaces, Gigabit Ethernet interfaces, ATM interfaces, HSSI interfaces, POS interfaces, FDDI interfaces, WIFI interfaces, 3G/4G/5G cellular interfaces, CAN BUS, LoRA, and the like. Generally, these interfaces may include ports appropriate for communication with the appropriate media. In some cases, they may also include an independent processor and, in some instances, volatile RAM. The independent processors may control such communications intensive tasks as packet switching, media control, signal processing, crypto processing, and management. By providing separate processors for the communication intensive tasks, these interfaces allow the master CPU (e.g., CPU 604) to efficiently perform routing computations, network diagnostics, security functions, etc.

Although the system shown in FIG. 6 is one specific network device of the present disclosure, it is by no means the only network device architecture on which the present disclosure can be implemented. For example, an architecture having a single processor that handles communications as well as routing computations, etc., is often used. Further, other types of interfaces and media could also be used with the network device 600.

Regardless of the network device's configuration, it may employ one or more memories or memory modules (including memory 606) configured to store program instructions for the general-purpose network operations and mechanisms for roaming, route optimization and routing functions described herein. The program instructions may control the operation of an operating system and/or one or more applications, for example. The memory or memories may also be configured to store tables such as mobility binding, registration, and association tables, etc. Memory 606 could also hold various software containers and virtualized execution environments and data.

The network device 600 can also include an application-specific integrated circuit (ASIC) such as ASIC 612, which can be configured to perform routing and/or switching operations. ASIC 612 can communicate with other components in the network device 600 via the bus 610, to exchange data and signals and coordinate various types of operations by the network device 600, such as routing, switching, and/or data storage operations, for example.

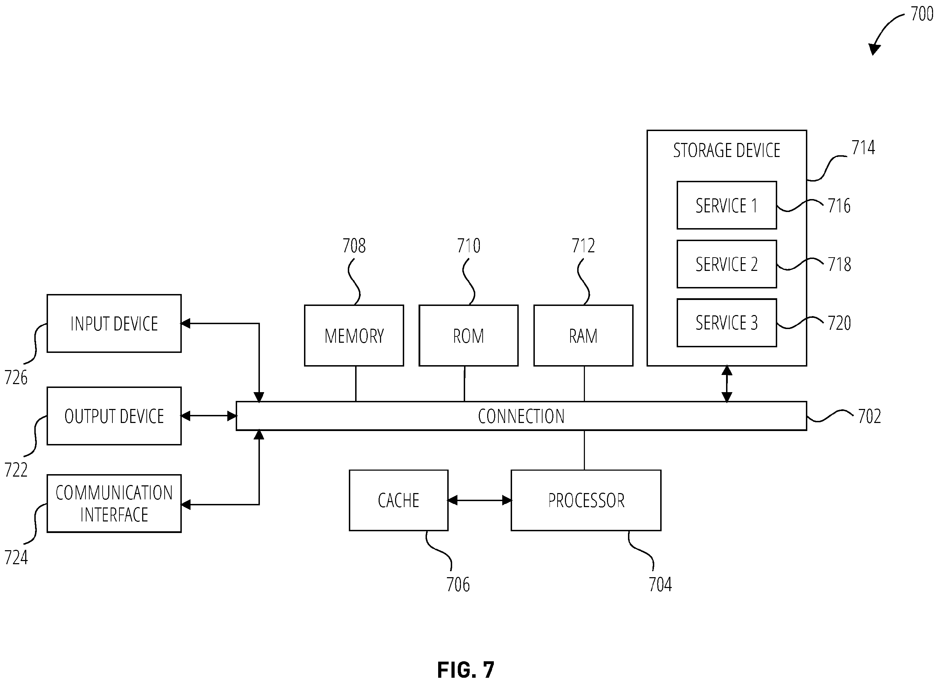

FIG. 7 shows an example of computing system 700, which can be for example any computing device making up external probing appliance 102, nodes 104-122, or any component thereof in which the components of the system are in communication with each other using connection 702. Connection 702 can be a physical connection via a bus, or a direct connection into processor 704, such as in a chipset architecture. Connection 702 can also be a virtual connection, networked connection, or logical connection.

In some embodiments, computing system 700 is a distributed system in which the functions described in this disclosure can be distributed within a datacenter, multiple data centers, a peer network, etc. In some embodiments, one or more of the described system components represents many such components each performing some or all of the function for which the component is described. In some embodiments, the components can be physical or virtual devices.

Example computing system 700 includes at least one processing unit (CPU or processor) such as processor 704 and connection 702 that couples various system components including system memory 708, such as read-only memory (e.g., ROM 710) and random access memory (e.g., RAM 712) to processor 704. Computing system 700 can include a cache of high-speed memory 706 connected directly with, in close proximity to, or integrated as part of processor 704.

Processor 704 can include any general purpose processor and a hardware service or software service, such as services 716, 718, and 720 stored in storage device 714, configured to control processor 704 as well as a special-purpose processor where software instructions are incorporated into the actual processor design. Processor 704 may essentially be a completely self-contained computing system, containing multiple cores or processors, a bus, memory controller, cache, etc. A multi-core processor may be symmetric or asymmetric.

To enable user interaction, computing system 700 includes an input device 726, which can represent any number of input mechanisms, such as a microphone for speech, a touch-sensitive screen for gesture or graphical input, keyboard, mouse, motion input, speech, etc. Computing system 700 can also include output device 722, which can be one or more of a number of output mechanisms known to those of skill in the art. In some instances, multimodal systems can enable a user to provide multiple types of input/output to communicate with computing system 700. Computing system 700 can include communication interface 724, which can generally govern and manage the user input and system output. There is no restriction on operating on any particular hardware arrangement, and therefore the basic features here may easily be substituted for improved hardware or firmware arrangements as they are developed.

Storage device 714 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

The storage device 714 can include software services, servers, services, etc., that when the code that defines such software is executed by the processor 704, it causes the system to perform a function. In some embodiments, a hardware service that performs a particular function can include the software component stored in a computer-readable medium in connection with the necessary hardware components, such as processor 704, connection 702, output device 722, etc., to carry out the function.

In summary, systems, methods, and computer-readable media are provided for path tracing proxy behavior using an external probing appliance. An example method can include generating, at an external probing appliance of a network, a probe packet, the probe packet including a source address, a destination address, and a packet tracing indication in a next header field of the probe packet, the packet tracing indication triggering a proxy source behavior at a source node having the source address and a proxy sink behavior at a sink node having the destination address; sending the probe packet to the source node to trigger a packet tracing mechanism; and receive an updated probe packet from the sink node, the updated probe packet including probe data associated with one or more data flows in the network as the one or more data flows traverse the network from the source node to the sink node.

For clarity of explanation, in some instances the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program, or a collection of programs that carry out a specific function. In some embodiments, a service can be considered a server. The memory can be a non-transitory computer-readable medium.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, solid state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A packet probing method, comprising:
generating, at an external probing appliance of a network, a probe packet, the probe packet including a source address, a destination address, and a packet tracing indication in a next header field of the probe packet, the packet tracing indication triggering a proxy source behavior at a source node having the source address and a proxy sink behavior at a sink node having the destination address;
sending the probe packet to the source node to trigger a packet tracing mechanism; and
receive an updated probe packet from the sink node, the updated probe packet including probe data associated with one or more data flows in the network as the one or more data flows traverse the network from the source node to the sink node.

2. The packet probing method of claim 1, wherein the probe packet is generated with one or more values for equal cost multi-path monitoring.

3. The packet probing method of claim 1 or 2, wherein the source address and the destination address are in a measurement virtual routing and forwarding (VRF).

4. The packet probing method of any of claims 1 to 3, wherein the source node encapsulates the probe packet to reach the sink node by adding IPv6 destination and IPv6 Hop-by-Hop (HBH) headers.

5. The packet probing method of any of claims 1 to 4, wherein an IPv6 Hop-by-Hop header specifies recording of midpoint compressed data (MCD) at each of one or more hops between the source node and the sink node.

6. The packet probing method of any of claims 1 to 5, wherein the sink node, upon receiving the probe packet, decapsulates the probe packet to retrieve the probe data.

7. The packet probing method of claim 6, wherein the probe data is included in a payload of the updated probe packet to be sent to the external probing appliance.

8. A system comprising:
means for generating, at an external probing appliance of a network, a probe packet, the probe packet including a source address, a destination address, and a packet tracing indication in a next header field of the probe packet, the packet tracing indication triggering a proxy source behavior at a source node having the source address and a proxy sink behavior at a sink node having the destination address;
means for sending the probe packet to the source node to trigger a packet tracing mechanism; and
means for receiving an updated probe packet from the sink node, the updated probe packet include probe data associated with one or more data flows in the network as the one or more data flows traverse the network from the source node to the sink node.

9. The system of claim 8, wherein the probe packet is generated with one or more values for equal cost multi-path monitoring.

10. The system of claim 8 or 9, wherein the source address and the destination address are in a measurement virtual routing and forwarding (VRF).

11. The system of any of claims 8 to 10, wherein the source node encapsulates the probe packet to reach the sink node by adding IPv6 destination and IPv6 Hop-by-Hop (HBH) headers.

12. The system of any of claims 8 to 11, wherein an IPv6 Hop-by-Hop header specifies recording of midpoint compressed data (MCD) at each of one or more hops between the source node and the sink node.

13. The system of any of claims 8 to 12, wherein the sink node, upon receiving the probe packet, decapsulates the probe packet to retrieve the probe data.

14. A computer program, computer program product or computer readable medium comprising instructions which, when executed by a computer, cause the computer to carry out the steps of the method of any of claims 1 to 7.
